# FASCICULE DE BREVET EUROPEEN

(11) **EP 3 028 287 B1**
(45) Date de publication et mention de la délivrance du brevet: **15.11.2017**
(21) Numéro de dépôt: 14744328.7
(22) Date de dépôt: 28.07.2014
(51) Int. Cl.: H01G 11/18, H01G 11/10, H01G 11/82, H01G 2/08, H01G 4/38, H01G 9/00, H01M 2/00, H01M 6/50, H01M 10/613, H01G 2/02, H01G 9/08, H01G 9/26, H01G 17/00, H01G 11/84

(54) **MODULE DE STOCKAGE D'ÉNERGIE COMPRENANT UNE PLURALITÉ D'ENSEMBLES DE STOCKAGE D'ÉNERGIE**
ENERGIESPEICHERMODUL BEINHALTEND EINE MEHRZAHL VON ENERGIESPEICHERANORDNUNGEN
ENERGY STORAGE MODULE COMPRISING A PLURALITY OF ENERGY STORAGE ASSEMBLIES

(30) Priorité: 30.07.2013 FR 1357504
(43) Date de publication de la demande: 08.06.2016
(73) Titulaire: Blue Solutions, 29500 Ergué Gabéric (FR)
(72) Inventeur: JUVENTIN, Anne-Claire, 29000 Quimper (FR); LE GALL, Laurent, 29500 Ergue Gaberic (FR)
(74) Mandataire: Regimbeau
(86) Numéro de dépôt international: PCT/EP2014/066125
(87) Numéro de publication internationale: WO 2015/014769

(56) Documents cités:
- EP-A1- 2 608 309
- WO-A1-2012/121099
- WO-A1-2013/037742
- DE-A1-102008 059 972
- DE-A1-102011 009 768
- US-A1- 2007 046 259
- US-A1- 2012 087 060

## Description

L'invention concerne un module de stockage d'énergie, comprenant une pluralité d'ensembles de stockage d'énergie.

On entend, dans le cadre de la présente invention, par « ensemble de stockage d'énergie électrique », soit un condensateur (i.e. un système passif comprenant deux électrodes et un isolant), soit un supercondensateur (i.e. un système comprenant au moins deux électrodes, un électrolyte et au moins un séparateur), soit une batterie notamment de type batterie au lithium (i.e. un système comprenant au moins une anode, au moins une cathode et un électrolyte entre l'anode et la cathode). La présente invention s'attache tout de même plus particulièrement à un module de supercondensateurs. WO 2013/037742 A1 divulgue un module comprenant une pluralité d'ensembles de stockage d'énergie reliés électriquement entre eux, le module comportant une enveloppe externe dans laquelle sont agencés les ensembles de stockage et au moins un échangeur de chaleur. Un tel module dégage une chaleur importante du fait de la résistance interne des ensembles de stockage d'énergie qui génèrent des pertes d'énergie par effet Joule. Pour éviter des dégradations du module à cause d'une température excessive des ensembles, on munit les modules de stockage d'énergie de moyens pour évacuer la chaleur. Des modules peuvent à cet effet être associés à des échangeurs de chaleur, par exemple des ailettes pour augmenter la surface thermique d'échange avec l'air ou un élément permettant le passage d'un fluide à proximité des ensembles , afin d'évacuer la chaleur par le biais de ce fluide.

Ces échangeurs de chaleur sont généralement placés à l'extérieur du module, au voisinage d'une face d'évacuation thermique du module que l'on rend la plus conductrice possible thermiquement.

Toutefois, dans les modules de grande capacité, comprenant un nombre importants d'ensembles de stockage d'énergie, on a remarqué qu'une telle association du module avec un échangeur de chaleur n'était pas toujours suffisante.

L'invention a ainsi pour objet de mettre au point un module de stockage d'énergie qui permette une évacuation optimale de la chaleur et ce quelle que soit la taille et la capacité totale du module.

A cet effet, l'invention a pour objet un module de stockage d'énergie comprenant une pluralité d'ensembles de stockage d'énergie reliés électriquement entre eux, le module comportant une enveloppe externe dans laquelle sont agencés les ensembles de stockage et au moins un échangeur de chaleur, dans lequel :
- les ensembles de stockage d'énergie sont disposés côte à côte sur au moins deux niveaux distincts, le ou l'au moins un des échangeurs de chaleur étant placé entre deux niveaux adjacents afin d'être en contact thermique avec au moins un ensemble de stockage de chacun des deux niveaux adjacents sur deux faces de contact respectives opposées de l'échangeur,
- ledit ou l'au moins un desdits échangeurs est fixé à l'enveloppe du module au niveau d'au moins une paroi de fixation distincte des faces de contact, les parois de fixation de l'échangeur et de l'enveloppe étant conformées de sorte que le module présente un espace entre les parois de fixation correspondantes de l'échangeur et de l'enveloppe, à au moins un emplacement distinct d'un lieu de fixation.

Ainsi, selon l'invention, l'échangeur de chaleur est placé directement à l'intérieur de l'enveloppe du module et non à l'extérieur du module, en étant en contact avec l'enveloppe du module. Cela permet une meilleure évacuation thermique de la chaleur générée par les ensembles de stockage puisque l'échangeur est plus directement en contact avec les ensembles que dans l'état de la technique, l'enveloppe du module n'étant pas interposée entre les ensembles et l'échangeur.

En outre, l'échangeur étant placé au milieu du module comprend deux faces d'échange de chaleur opposées, chacune permettant d'évacuer la chaleur générée par les ensembles de stockage de deux niveaux adjacents distincts. On augmente là encore l'efficacité de l'évacuation thermique du module sans pour autant augmenter considérablement l'encombrement du module, puisque l'on ajoute un seul échangeur de chaleur dans le module. L'encombrement est également amélioré par rapport à celui de deux modules adjacents de plus petite taille associés à un même échangeur de chaleur, puisqu'il n'y a pas d'interposition d'enveloppe entre l'échangeur et chaque niveau d'ensembles de stockage.

De plus, même si la fixation de l'échangeur à l'enveloppe, nécessaire pour la bonne tenue mécanique du module, est susceptible de perturber le fonctionnement de l'échangeur puisque la chaleur provenant de l'extérieur du module est transmise à l'échangeur par l'intermédiaire de l'enveloppe, une architecture particulière de l'échangeur permet de rendre ce facteur négligeable. De telles perturbations seraient en effet susceptibles de créer des inhomogénéités dans le refroidissement des ensembles, ce qui aurait des conséquences concernant leur vieillissement et diminuerait donc la durée de vie du module. Les inventeurs se sont aperçus qu'il suffisait de ménager un espace entre l'échangeur de chaleur et l'enveloppe externe, ce qui par l'interposition d'une lame d'air entre l'échangeur et l'enveloppe permet d'isoler ces éléments l'un de l'autre et d'éviter de perturber le fonctionnement de l'échangeur.

Ainsi, l'invention permet de mettre au point un module de grande capacité dans lequel la chaleur est évacuée en grande quantité et de façon homogène, et qui présente un encombrement limité.

Le module selon l'invention peut en outre comprendre l'une ou plusieurs caractéristiques de la liste suivante :
- l'échangeur est conformé de sorte que le ou l'au moins des, notamment chaque, lieux de fixation de l'échangeur est en saillie relativement au reste de la paroi de fixation. On obtient ainsi l'espace entre les parois de fixation de l'enveloppe et de l'échangeur en adaptant la configuration de l'échangeur, ce qui permet de ne pas rendre trop complexe la forme extérieure du module. Il serait toutefois tout à fait envisageable d'obtenir un module selon l'invention en modifiant la configuration de l'enveloppe, notamment en munissant au moins la face interne de celle-ci de dépressions,
- l'échangeur de chaleur comprend au moins un conduit dans lequel est destiné à circuler un fluide, par exemple de l'eau. L'échangeur peut alors comprendre une entrée et une sortie de fluide, l'enveloppe comportant au moins un orifice pour permettre le passage du fluide depuis l'extérieur. L'échangeur comporte notamment des connecteurs en saillie formant entrée et sortie de fluide, ces connecteurs étant configurés pour traverser l'orifice correspondant de l'enveloppe. Un joint est notamment interposé entre l'enveloppe et les connecteurs en saillie, le joint étant de préférence surmoulé sur l'enveloppe. Cette configuration d'échangeur est particulièrement adaptée puisque l'enveloppe présente une configuration relativement fermée malgré l'apport du fluide dans le module, qui permet de ne pas mettre en danger l'isolation électrique du module,
- l'échangeur de chaleur est destiné à être en contact thermique avec tous les ensembles de stockage des deux niveaux adjacents. Cela permet en effet d'évacuer une quantité de chaleur maximale à l'aide d'une unique pièce et donc d'optimiser la conception du module,
- l'échangeur de chaleur comprend deux faces de contact opposées et au moins une paroi latérale s'étendant entre les faces de contact opposées, de préférence essentiellement perpendiculairement aux faces de contact, les lieux de fixation étant répartis sur la ou au moins l'une des parois latérales de sorte qu'elle(s) constitue(nt) la ou les parois de fixation. On peut ainsi obtenir de préférence un échangeur de chaleur relié à toutes les parois latérales de l'enveloppe, sur tout son pourtour, ce qui permet d'assurer une bonne tenue mécanique du module, et ce quelle que soit sa position en fonctionnement (même dans le cas où l'échangeur s'étend essentiellement verticalement),
- l'échangeur de chaleur est fixé à l'enveloppe du module par vissage, les lieux de fixation de l'échangeur comportant à cet effet des orifices de fixation, destinés à être placés en regard d'orifices de fixation de l'enveloppe du module. Ce mode de fixation est en effet simple et peu coûteux,
- l'espace compris entre les parois de fixation de l'échangeur et de l'enveloppe est dimensionné de sorte que la distance entre les parois de fixation correspondantes de l'enveloppe et de l'échangeur est inférieure à 3 mm. Cela permet de maximiser la surface des faces de contact de l'échangeur,
- la surface des portions de la ou des parois de fixation de l'échangeur en contact avec l'enveloppe est inférieure à 20%, notamment à 10%, de la surface totale de la ou desdites parois de fixation. De préférence, l'une des ou les saillies dans lesquelles sont ménagés les lieux de fixation sont de dimension inférieure à 30 mm dans au moins une direction, de préférence deux directions essentiellement normales, de la ou des parois de fixation, ce qui permet de minimiser la surface de l'échangeur en contact avec l'enveloppe et ainsi les perturbations du fonctionnement de l'échangeur du fait des échanges thermiques avec l'extérieur par le biais des parois de l'enveloppe,
- les ensembles de stockage d'énergie s'étendant essentiellement selon une direction longitudinale et sont notamment de forme cylindrique. Ils sont superposés avec l'une des faces de contact de l'échangeur au niveau d'une de leur face d'extrémité selon la direction longitudinale,
- le module comprend au moins une barrette superposée aux faces d'extrémité de deux ensembles de stockage adjacents afin de relier électriquement lesdits ensembles,
- au moins un organe d'isolation électrique, tel qu'un tapis réalisé en élastomère notamment l'EPDM, est interposé entre les ensembles et l'échangeur, de préférence entre les barrettes et l'échangeur,
- les ensembles de stockage d'énergie sont des supercondensateurs,
- le module peut également comprendre plus de deux niveaux, un échangeur de chaleur étant de préférence interposé entre chaque paire de niveaux adjacents du module,
- chaque ensemble du module est relié électriquement à au moins un autre ensemble du module. Tous les ensembles peuvent être reliés électriquement les uns aux autres (par exemple en série) ou les ensembles peuvent former des groupes indépendants d'ensembles reliés électriquement entre eux. Les ensembles d'un même niveau peuvent notamment être tous reliés électriquement entre eux, notamment en série.

L'invention a également pour objet un procédé d'assemblage d'un module de stockage d'énergie comportant une pluralité d'ensembles de stockage et au moins un échangeur de chaleur, le procédé comprenant les étapes suivantes :
- on forme un premier et un deuxième groupes d'ensembles de stockage d'énergie disposés côte à côte, qu'on relie de préférence électriquement entre eux, notamment à l'aide de barrettes de connexion,
- on met en place l'échangeur ou les échangeurs de chaleur, comportant au moins deux faces de contact opposées, entre les deux groupes d'ensembles, de sorte que chacune des faces de contact soit respectivement en contact thermique avec au moins un ensemble de stockage de l'un des groupes,
- on dispose une enveloppe externe de sorte qu'elle entoure les groupes d'ensembles et l'échangeur de chaleur et on fixe l'échangeur à au moins une paroi de l'enveloppe au niveau d'au moins une de ses parois distincte des faces de contact, l'échangeur et l'enveloppe étant conformés de sorte que le module présente un espace entre les parois de fixation correspondantes de l'échangeur et de l'enveloppe, à au moins un emplacement distinct d'un lieu de fixation.

On va maintenant décrire un module selon l'invention à l'aide des dessins décrivant un exemple de réalisation particulier et non limitatif de l'invention, dans lesquels :
- la figure 1 est une vue en éclaté d'un module selon un mode de réalisation particulier de l'invention,
- la figure 2 est une vue en perspective et en écorché du module une fois ce dernier assemblé,
- la figure 3 est une vue en perspective de l'échangeur de chaleur du module de la figure 1.

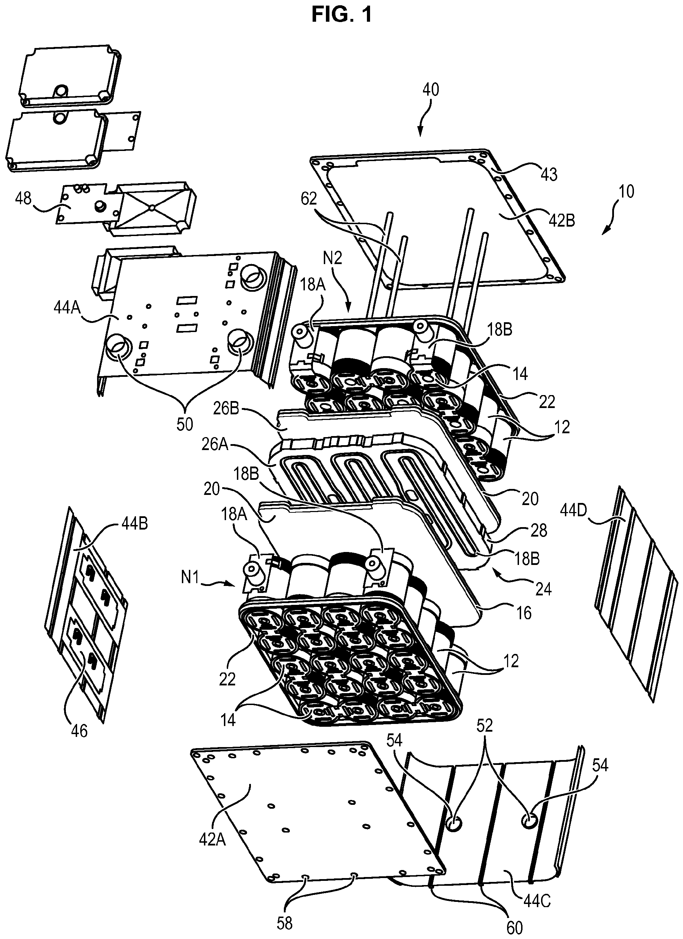

La figure 1 représente un éclaté d'un module 10 selon un mode de réalisation particulier de l'invention. Comme on le voit, ce module comprend une pluralité d'ensembles de stockage d'énergie 12 agencés sur deux niveaux distincts N1 et N2..

Chaque ensemble 12 est de forme générale cylindrique et comprend un boîtier muni d'un corps comportant une paroi latérale s'étendant selon l'axe longitudinal de l'ensemble, fermée par une paroi d'extrémité à une des extrémités de la paroi latérale et ouverte à son extrémité opposée. Un couvercle vient coiffer le corps au niveau de son extrémité ouverte. Le boîtier comprend donc une deuxième paroi d'extrémité à l'extrémité longitudinale de la paroi latérale. Le boîtier contient un élément de stockage d'énergie bobiné comportant un enroulement d'une superposition de deux électrodes avec interposition d'un séparateur. Un électrolyte a également été introduit dans le boîtier pour l'imprégnation des électrodes. Chaque électrode de l'enroulement est reliée électriquement à une face d'extrémité de l'ensemble, chacune des faces d'extrémité constituant une borne de l'ensemble.

On ne rentrera pas plus avant dans la description de l'architecture des ensembles, qui n'est pas au coeur de l'invention. De fait, le lecteur notera que l'architecture de chacun des ensembles peut être très différente de ce qui a été décrit. L'ensemble peut par exemple comprendre un corps tubulaire fermé à chacune de ses extrémités par un couvercle ou avoir une autre forme qu'une forme cylindrique.

Chaque niveau N1, N2 comporte donc une pluralité d'ensembles 12 identiques, agencés de sorte que leurs axes longitudinaux soient essentiellement parallèles. Ils sont reliés électriquement en série par l'intermédiaire de barrettes conductrices 14. Chaque ensemble comporte à cet effet une barrette 14 agencée sur l'une de ses faces d'extrémités et le reliant électriquement à un premier ensemble adjacent et une autre barrette 14 agencés sur l'autre de ses faces d'extrémité et le reliant à un autre ensemble adjacent. Les ensembles sont au contact les uns des autres et sont isolés électriquement à leurs bornes qui ne sont pas au même potentiel (les bornes non reliées par les barrettes) par l'intermédiaire de manchons isolant 16 emmanchés sur chacun des ensembles. Des barrettes s'étendent donc dans chaque plan d'extrémité longitudinal du groupe d'ensembles formant un niveau N1, N2. Tous les ensembles d'un même niveau sont reliés électriquement en série. Ils sont également reliés vers l'extérieur par l'intermédiaire de bornes de sortie 18A, 18B reliées chacune à la borne de l'ensemble dont le potentiel est respectivement le plus haut ou le plus bas.

Là encore, on a décrit rapidement la structure d'un groupe d'ensembles formant un des niveaux N1, N2 du module selon le mode de réalisation particulier décrit ici mais ce groupe d'ensemble pourrait être configuré différemment. Les barrettes pourraient s'étendre toutes dans un seul plan d'extrémité du groupe d'ensembles. Les ensembles d'un même niveau pourraient également ne pas tous être reliés électriquement entre eux. Les ensembles des deux niveaux pourraient également être reliés entre eux. Deux ensembles adjacents pourraient également ne pas être en contact l'un avec l'autre au niveau de leur paroi latérale.

Pour isoler les ensembles 12 de chaque niveau N1, N2 des éléments environnants, un organe d'isolation est placé à chaque plan d'extrémité longitudinal de chacun des niveaux N1, N2. A l'un des plans d'extrémité, destiné à se trouver côté intérieur du module, on a notamment placé un tapis 20 réalisé en un matériau thermiquement conducteur et électriquement isolant qui recouvre les faces d'extrémité des ensembles. Au niveau de l'autre plan d'extrémité de chacun des niveaux, on a placé une bague annulaire 22 entourant tous les ensembles 12. Le tapis 20 et la bague annulaire 22 sont par exemple réalisés en élastomère, notamment en EPDM (éthylène-propylène-diène monomère).

Evidemment, l'isolation électrique peut être réalisée différemment de ce qui a été décrit ici. Un tapis thermique 20 peut notamment être placé à chaque plan d'extrémité de chaque niveau N1, N2 du module. L'isolation peut également être effectuée à l'aide d'éléments solidaires de l'enveloppe du module ou d'autres éléments de celui-ci tels que l'échangeur de chaleur.

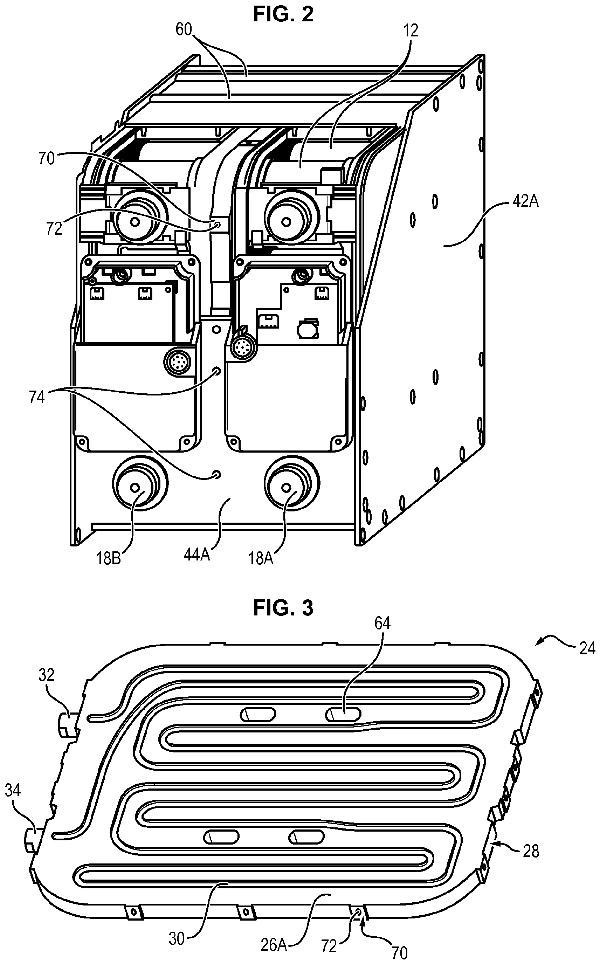

Comme on le voit également sur la figure 1, le module comprend un échangeur de chaleur 24 situé dans le module, entre les deux niveaux N1, N2 d'ensembles 12. Cet échangeur comporte deux faces de contact opposées 26A, 26B destinées chacune à évacuer la chaleur provenant respectivement des niveaux N1 et N2 du module. Chacune des faces 26A, 26B est à cet effet en contact avec les tapis 20 agencés sur les groupes d'ensembles 12 de chacun des niveaux N1, N2 et en contact thermique avec les ensembles. L'échangeur de chaleur comporte également une paroi latérale 28 périphérique reliant entre elles les deux faces de contact et délimitant un espace essentiellement fermé entre ces faces 26A, 26B, à l'intérieur duquel serpente un conduit 30 (représenté par transparence sur la figure 3) destiné à transporter un fluide calorifique par lequel est évacué la chaleur, tel que de l'eau. Pour alimenter le conduit en fluide, l'échangeur 24 comprend une entrée 32 et une sortie 34 de fluide, constituées chacune par un connecteur et ménagées sur la paroi latérale périphérique. On décrira plus avant par la suite l'échangeur. L'échangeur est dimensionné pour être superposé à tous les ensembles, la face de contact étant alors en contact thermique avec tous les ensembles de chacun des niveaux.

Le module comporte également une enveloppe 40 destinée à entourer les ensembles 12 des niveaux N1 et N2 et l'échangeur de chaleur. Cette enveloppe 40 est de forme parallélépipédique et comporte six parois indépendantes les unes des autres.

Le module comporte notamment des parois 42A, 42B supérieure et inférieure en contact avec les faces d'extrémité des ensembles 12, au niveau des plans d'extrémité, dit extérieur, à savoir opposés au plan en contact thermique avec l'échangeur, de chacun des niveaux N1, N2. Chacune de ces parois comporte sur sa face interne, orientée vers l'intérieur du module, une mousse 43 permettant d'optimiser l'isolation électrique du module, en complément de la bague 22.

L'enveloppe comporte également quatre parois latérales 44A-44D entourant les parois latérales des ensembles 12 ainsi que celle 28 de l'échangeur de chaleur. Ces parois forment des interfaces du module avec l'extérieur et sont également destinées à porter des éléments fonctionnels du module. Par exemple, comme on le voit sur la figure 1, la paroi 44B porte les cartes électroniques 46 permettant la gestion de l'équilibrage des ensembles de stockage 12 reliés électriquement d'un même niveau. La paroi 44A comporte également des éléments électroniques 48 sur sa face externe, enfermés dans un boîtier. La paroi 44A comporte en outre des orifices 50 permettant de laisser passer les bornes de sortie 18A, 18B à l'extérieur du module. La paroi 44C comporte également des orifices 52 qui permettent de laisser passer les connecteurs 32, 34 de l'échangeur de chaleur vers l'extérieur. Pour assurer l'étanchéité, on remarquera qu'un joint 54 est positionné au voisinage de chaque orifice 52 afin d'être interposé entre le connecteur 32, 34 et l'orifice correspondant de la paroi 44C. Ce joint peut être rapporté ou surmoulé sur l'enveloppe. On notera qu'une languette de mousse peut également être enroulée autour des parois latérales des ensembles 12 pour optimiser leur isolation électrique.

Les parois 42, 44 sont reliées entre elles à l'aide de moyens de fixation par vissage. Les parois 42 comprennent à cet effet des orifices de fixation 58 et les parois 44 des canaux 60 en regard dans lesquels sont destinées à s'enfoncer des vis. Les canaux 60 s'étendent en saillie de la paroi 44 sur sa face externe. La face interne des parois 44 est en revanche essentiellement plane.

Le module selon l'invention comprend également des renforts 62 permettant d'assurer une bonne tenue mécanique à l'enveloppe, lesdits renforts étant reliés aux deux parois opposées 42A, 42B, passant entre les ensembles des deux niveaux N1, N2 et dans des orifices 64 prévus à cet effet de l'échangeur de chaleur.

La configuration de l'enveloppe n'est pas non plus limitée à ce qui a été présenté dans le mode de réalisation décrit ici. Les parois de l'enveloppe pourraient être d'un seul tenant. De plus, les éléments fonctionnels pourraient être présents sur d'autres parois que ce qui a été présenté. Les renforts sont également optionnels ou pourraient être mis en place sous une autre forme.

On va maintenant décrire plus en détails la configuration de l'échangeur de chaleur 24 et sa coopération avec l'enveloppe 40. Comme on l'a indiqué, cet échangeur est situé à l'intérieur du module et,pour assurer une bonne tenue mécanique du module, il est fixé aux parois 44 de l'enveloppe, par vissage. Pour ce faire, l'échangeur 24 comporte une pluralité de lieux de fixation 70 sur sa paroi latérale. Ces lieux de fixation 70 sont répartis sur le pourtour de l'échangeur, de sorte que ce dernier est relié à toutes les parois 44 de l'enveloppe. Ses dimensions sont donc essentiellement complémentaires de celles de l'enveloppe. Chacun des lieux de fixation 70 comprend un orifice de fixation 72 dans lequel est destinée à être insérée une vis de fixation également insérée dans un orifice 74 en regard de la paroi 44 de l'enveloppe, mieux visible sur la figure 2.

Comme on le voit sur la figure 3, chaque lieu de fixation 70 est en saillie du reste de la paroi latérale, de sorte que seuls les lieux de fixation soient en contact avec la paroi 44 de l'enveloppe. Les lieux de fixation sont ainsi en saillie d'environ 1 mm relativement au reste de la paroi latérale 28. Ainsi, un espace subsiste entre l'échangeur et l'enveloppe (la face interne des parois 44 de l'enveloppe étant plane) permettant l'isolation de l'échangeur relativement à l'enveloppe par lame d'air. Cela permet d'éviter que le fonctionnement de l'échangeur soit perturbé par la chaleur circulant dans les parois de l'enveloppe (en provenance des ensembles ou de l'extérieur). Ces lieux de fixation sont dimensionnés de sorte que la saillie soit la plus petite possible pour minimiser la surface de la paroi latérale de l'échangeur en contact avec l'enveloppe. Ses dimensions ne dépassent pas notamment 30 mm selon deux directions perpendiculaires, comprenant ici notamment la direction normale aux faces de contact et 20% de la surface totale de la paroi latérale 28 de l'échangeur. On assure de cette façon un bon fonctionnement de l'échangeur de chaleur, malgré sa mise en place à l'intérieur du module.

La forme de l'échangeur de chaleur 24 n'est pas non plus limitée à ce qui a été décrit. On pourrait par exemple imaginer que l'enveloppe soit configurée pour comprendre des évidements au niveau de sa face interne alors que la paroi latérale 28 de l'échangeur est plane. La configuration de la paroi latérale 28 peut également être différente même lorsque la forme des parois 44 ne varie pas, tant qu'elle présente des zones de fixation en saillie du reste de la paroi.

On va maintenant décrire le procédé permettant de fabriquer le module selon l'invention. Tout d'abord, on forme les groupes d'ensembles 12 destinés à former les niveaux N1 et N2 et on les relie électriquement en série entre eux, à l'aide des barrettes 14. On place ensuite les éléments d'isolation électrique 20, 22 sur les faces d'extrémités des groupes des niveaux N1 et N2. On accole ensuite chacun des assemblages sur une face de contact opposée 26A, 26B de l'échangeur de chaleur 24. On place également les éléments fonctionnels (carte électronique 46, 48, joints, etc.) sur les différentes parois 44 de l'enveloppe, puis on met en place ces parois ainsi équipées de l'enveloppe 40 autour des deux niveaux d'ensembles et de l'échangeur, éventuellement avec interposition de mousse. Puis, on connecte le câblage des ensembles aux cartes électronique, on place les bornes 18A, 18B et les connecteurs d'entrée 32 et de sortie 34 de l'échangeur 24 dans les orifices 50, 52 correspondants de l'enveloppe puis on relie les différentes parois 42, 44 de l'enveloppe par vissage ainsi que les parois latérales 44 de l'enveloppe avec la paroi latérale 28 de l'échangeur 24.

L'invention permet de cette façon d'obtenir un module qui garantit de façon très satisfaisante l'évacuation de la chaleur générée par les ensembles contenus dans le module et ce malgré un encombrement limité.

Bien entendu, le module et le procédé de fabrication selon l'invention peuvent présenter de nombreuses variantes relativement au mode de réalisation des figures. Les variantes décrites ci-dessus peuvent notamment s'appliquer. Le module peut également comprendre un échangeur qui ne couvre pas toute la surface des ensembles ou n'est en contact thermique qu'avec une partie des ensembles. Le module peut également comprendre une pluralité d'échangeurs entre deux niveaux. Le module peut également comprendre plus de deux niveaux et un échangeur entre chaque paire de niveaux adjacents ou entre certaines paires de niveaux.

## Revendications

1. Module de stockage d'énergie (10) comprenant une pluralité d'ensembles de stockage d'énergie (12) reliés électriquement entre eux, le module comportant une enveloppe externe (40) dans laquelle sont agencés les ensembles de stockage (12) et au moins un échangeur de chaleur (24), le module étant **caractérisé en ce que** :
- les ensembles de stockage d'énergie (12) sont disposés côte à côte sur au moins deux niveaux distincts (N1, N2), le ou au moins l'un des échangeurs de chaleur (24) étant placé entre deux niveaux adjacents afin d'être en contact thermique avec au moins un ensemble de stockage de chacun des deux niveaux adjacents sur deux faces de contact respectives (26A, 26B) opposées de l'échangeur,
- ledit ou l'au moins un desdits échangeurs (24) est fixé à l'enveloppe (40) du module au niveau d'au moins une paroi de fixation (28) distincte des faces de contact (26A, 26B), les parois de fixation de l'échangeur et de l'enveloppe étant conformées de sorte que le module présente un espace entre les parois de fixation (28 ; 44) correspondantes de l'échangeur et de l'enveloppe, à au moins un emplacement distinct d'un lieu de fixation (70).

2. Module selon la revendication précédente, dans lequel l'échangeur (24) est conformé de sorte que le ou l'au moins un des, notamment chaque, lieux de fixation (70) de l'échangeur est en saillie du reste de la paroi de fixation (28).

3. Module selon l'une quelconque des revendications précédentes, dans lequel l'échangeur de chaleur (24) comprend au moins un conduit (30) dans lequel est destiné à circuler un fluide.

4. Module selon la revendication précédente, dans lequel l'échangeur de chaleur (24) comporte une entrée (32) et une sortie (34) de fluide, l'enveloppe comportant au moins un orifice (52) pour permettre le passage du fluide depuis l'extérieur.

5. Module selon la revendication précédente dans lequel l'échangeur comporte des connecteurs (32, 34) en saillie formant entrée et sortie de fluide, ces connecteurs étant configurés pour traverser l'orifice (52) correspondant de l'enveloppe (40), un joint (54) étant interposé entre l'enveloppe et les connecteurs en saillie.

6. Module selon l'une quelconque des revendications précédentes, dans lequel l'échangeur de chaleur (24) est destiné à être en contact thermique avec tous les ensembles de stockage (12) des deux niveaux adjacents (N1, N2).

7. Module selon l'une des revendications précédentes, dans lequel l'échangeur de chaleur (24)comprend deux faces de contact (26A, 26B) opposées et au moins une paroi latérale (28) s'étendant entre les faces de contact opposées, essentiellement perpendiculairement aux faces de contact, les lieux de fixation (70) étant répartis sur la ou au moins l'une des parois latérales de sorte qu'elles constituent la ou les parois de fixation.

8. Module selon l'une quelconque des revendications précédentes, dans lequel l'échangeur de chaleur (24) est fixé à l'enveloppe (40) du module par vissage, les lieux de fixation (70) de l'échangeur (24) comportant à cet effet des orifices de fixation (72), destinés à être placés en regard d'orifices de fixation (74) de l'enveloppe.

9. Module selon l'une quelconque des revendications précédentes, dans lequel l'espace situé entre les parois de fixation (28 ; 44) est dimensionné de sorte que la distance entre les parois de fixation correspondante de l'enveloppe et de l'échangeur est inférieure à 3 mm.

10. Module selon la revendication précédente, dans lequel la surface des portions (70) de la ou des parois de fixation (28) de l'échangeur en contact avec l'enveloppe (40) est inférieure à 20%, notamment 10%, de la surface totale de la ou des parois de fixation (28).

11. Module selon l'une quelconque des revendications précédentes, dans lequel les ensembles de stockage d'énergie (12) s'étendent essentiellement selon une direction dite longitudinale, et sont superposés avec l'une des faces de contact (26A, 26B) de l'échangeur au niveau d'une de leur face d'extrémité selon la direction longitudinale.

12. Module selon la revendication précédente, dans lequel le module comprend au moins une barrette (14) superposée aux faces d'extrémité de deux ensembles de stockage (12) adjacents afin de relier électriquement lesdits ensembles.

13. Module selon l'une quelconque des revendications précédentes, dans lequel au moins un organe d'isolation électrique, tel qu'un tapis (20) réalisé en élastomère, est interposé entre les ensembles (12) et l'échangeur (24).

14. Module selon l'une quelconque des revendications précédentes, dans lequel les ensembles de stockage d'énergie (12) sont des supercondensateurs.

15. Procédé d'assemblage d'un module de stockage d'énergie (10) comportant une pluralité d'ensembles de stockage (12) et au moins un échangeur de chaleur (24), comprenant les étapes suivantes :
- on forme un premier et un deuxième groupes d'ensembles de stockage d'énergie disposés côte à côte,
- on met en place au moins un échangeur (24) de chaleur, comportant au moins deux faces de contact opposées (26A, 26B), entre les deux groupes d'ensembles, de sorte que chacune des faces de contact soit respectivement en contact thermique avec au moins un ensemble de stockage (12) de l'un des groupes,
- on dispose une enveloppe externe (40) de sorte qu'elle entoure les groupes d'ensembles et l'échangeur de chaleur et on fixe l'échangeur à au moins une paroi (44) de l'enveloppe au niveau d'au moins une de ses parois (28) distincte des faces de contact (26A, 26B), l'échangeur et l'enveloppe étant conformés de sorte que le module présente un espace entre les parois de fixation correspondantes (28 ; 44) de l'échangeur et de l'enveloppe, à au moins un emplacement distinct d'un lieu de fixation (70).

## Patentansprüche

1. Energiespeichermodul (10), umfassend eine Vielzahl von Energiespeicheranordnungen (12), die elektrisch miteinander verbunden sind, wobei das Modul eine äußere Hülle (40) aufweist, in welcher die Speicheranordnungen (12) ausgebildet sind, und mindestens einen Wärmetauscher (24), wobei das Modul **dadurch gekennzeichnet ist, dass**:
- die Energiespeicheranordnungen (12) nebeneinander auf mindestens zwei unterschiedlichen Ebenen (N1, N2) angeordnet sind, wobei der oder mindestens einer der Wärmetauscher (24) zwischen zwei benachbarten Ebenen platziert ist, um im thermischen Kontakt mit mindestens einer Speicheranordnung jeder der zwei benachbarten Ebenen auf zwei jeweiligen Kontaktflächen (26A, 26B) gegenüber dem Tauscher zu sein,
- der oder mindestens einer der Tauscher (24) an der Hülle (40) des Moduls im Bereich von mindestens einer Befestigungswand (28), die sich von den Kontaktflächen (26A, 26B) unterscheidet, befestigt ist, wobei die Befestigungswände des Tauschers und der Hülle derart ausgebildet sind, dass das Modul einen Raum zwischen den entsprechenden Befestigungswänden (28; 44) des Tauschers und der Hülle an mindestens einer Stelle aufweist, die sich von einer Befestigungsstelle (70) unterscheidet.

2. Modul nach vorangehendem Anspruch, wobei der Tauscher (24) derart ausgebildet ist, dass die oder mindestens eine, insbesondere jede, der Befestigungsstellen (70) des Tauschers über den Rest der Befestigungswand (28) hervorsteht.

3. Modul nach einem der vorangehenden Ansprüche, wobei der Wärmetauscher (24) mindestens eine Leitung (30) umfasst, in welcher ein Fluid zu zirkulieren bestimmt ist.

4. Modul nach vorangehendem Anspruch, wobei der Wärmetauscher (24) einen Fluideinlass (32) und einen Fluidauslass (34) aufweist, wobei die Hülle mindestens eine Öffnung (52) aufweist, um den Durchgang des Fluids von außen zu erlauben.

5. Modul nach vorangehendem Anspruch, wobei der Tauscher hervorstehende Verbinder (32, 34) aufweist, die den Fluideinlass und den Fluidauslass bilden, wobei diese Verbinder konfiguriert sind, um die entsprechende Öffnung (52) der Hülle (40) zu durchqueren, wobei eine Dichtung (54) zwischen der Hülle und den hervorstehenden Verbindern angeordnet ist.

6. Modul nach einem der vorangehenden Ansprüche, wobei der Wärmetauscher (24) bestimmt ist, mit allen Speicheranordnungen (12) der zwei benachbarten Ebenen (N1, N2) im thermischen Kontakt zu sein.

7. Modul nach einem der vorangehenden Ansprüche, wobei der Wärmetauscher (24) zwei gegenüberliegende Kontaktflächen (26A, 26B) und mindestens eine Seitenwand (28) umfasst, die sich zwischen den gegenüberliegenden Kontaktflächen erstreckt, im Wesentlichen senkrecht zu den Kontaktflächen, wobei die Befestigungsstellen (70) auf der oder mindestens einer der Seitenwände derart verteilt sind, dass sie die Befestigungswand/-wände darstellen.

8. Modul nach einem der vorangehenden Ansprüche, wobei der Wärmetauscher (24) an der Hülle (40) des Moduls durch Schrauben befestigt ist, wobei die Befestigungsstellen (70) des Tauschers (24) zu diesem Zweck Befestigungsöffnungen (72) aufweisen, die bestimmt sind, gegenüber von Befestigungsöffnungen (74) der Hülle platziert zu sein.

9. Modul nach einem der vorangehenden Ansprüche, wobei der Raum zwischen den Befestigungswänden (28; 44) derart bemessen ist, dass der Abstand zwischen den entsprechenden Befestigungswänden der Hülle und des Tauschers kleiner als 3 mm ist.

10. Modul nach vorangehendem Anspruch, wobei die Fläche der Abschnitte (70) der Befestigungswand/-wände (28) des Tauschers im Kontakt mit der Hülle (40) unter 20 %, insbesondere 10 %, der Gesamtfläche der Befestigungswand/-wände (28) beträgt.

11. Modul nach einem der vorangehenden Ansprüche, wobei sich die Energiespeicheranordnungen (12) im Wesentlichen gemäß einer Längsrichtung erstrecken und mit einer der Kontaktflächen (26A, 26B) des Tauschers im Bereich einer ihrer Endflächen gemäß der Längsrichtung übereinanderliegen.

12. Modul nach vorangehendem Anspruch, wobei das Modul mindestens eine Leiste (14) über den Endflächen von zwei benachbarten Speicheranordnungen (12) umfasst, um die Anordnungen elektrisch zu verbinden.

13. Modul nach einem der vorangehenden Ansprüche, wobei mindestens ein elektrisches Isolationsorgan wie eine Matte (20) aus Elastomer zwischen den Anordnungen (12) und dem Tauscher (24) angeordnet ist.

14. Modul nach einem der vorangehenden Ansprüche, wobei die Energiespeicheranordnungen (12) Superkondensatoren sind.

15. Montageverfahren eines Energiespeichermoduls (10), aufweisend eine Vielzahl von Speicheranordnungen (12) und mindestens einen Wärmetauscher (24), umfassend die folgenden Schritte:
- Bilden einer ersten und einer zweiten Gruppe von nebeneinander angeordneten Energiespeicheranordnungen,
- Platzieren von mindestens einem Wärmetauscher (24), aufweisend mindestens zwei gegenüberliegende Kontaktflächen (26A, 26B) zwischen den zwei Anordnungsgruppen, so dass jede der Kontaktflächen jeweils im thermischen Kontakt mit mindestens einer Speicheranordnung (12) einer der Gruppen ist,
- Anordnen einer äußeren Hülle (40) derart, dass sie die Anordnungsgruppen und den Wärmetauscher umgibt, und Befestigen des Tauschers an mindestens einer Wand (44) der Hülle im Bereich von mindestens einer seiner Wände (28), die sich von den Kontaktflächen (26A, 26B) unterscheidet, wobei der Tauscher und die Hülle derart ausgebildet sind, dass das Modul einen Raum zwischen den entsprechenden Befestigungswänden (28; 44) des Tauschers und der Hülle an mindestens einer Stelle aufweist, die sich von einer Befestigungsstelle (70) unterscheidet.

## Claims

1. An energy storage module (10) comprising a plurality of energy storage assemblies (12) electrically connected to one another, the module comprising an external casing (40) in which are arranged the storage assemblies (12) and at least one heat exchanger (24), the module being **characterised in that**:
- the energy storage assemblies (12) are disposed side by side on at least two distinct levels (N1, N2), the or at least one of the heat exchangers (24) being positioned between two adjacent levels so as to be in thermal contact with at least one storage assembly of each of the two adjacent levels on two opposite respective contact faces (26A, 26B) of the exchanger,
- said or at least one of said exchangers (24) is fixed to the casing (40) of the module at least at a securing wall (28) that is distinct from the contact faces (26A, 26B), the securing walls of the exchanger and of the casing being configured in such a way that the module has a space between the corresponding securing walls (28; 44) of the exchanger and of the casing, at least at a location distinct from a securing site (70).

2. The module according to the preceding claim, wherein the exchanger (24) is configured in such a way that the or at least one, especially each, of the securing sites (70) of the exchanger is protruding from the remainder of the securing wall (28).

3. The module according to any of the preceding claims, wherein the heat exchanger (24) comprises at least one duct (30) into which a fluid is intended to travel.

4. The module according to the preceding claim, wherein the heat exchanger (24) comprises a fluid inlet (32) and outlet (34), the casing comprising at least one hole (52) to enable the passage of fluid from the outside.

5. The module according to the preceding claim, wherein the exchanger comprises protruding connectors (32, 34) forming a fluid inlet and outlet, these connectors being configured to pass through the corresponding hole (52) of the casing (40), a seal (54) being interposed between the casing and the protruding connectors.

6. The module according to any of the preceding claims, wherein the heat exchanger (24) is intended to be in thermal contact with all the storage assemblies (12) of both adjacent levels (N1, N2).

7. The module according to any of the preceding claims, wherein the heat exchanger (24) comprises two opposite contact faces (26A, 26B) and at least one side wall (28) extending between the opposite contact faces, substantially perpendicular to the contact faces, the securing sites (70) being distributed on the or at least one of the side walls in such a way that the latter form the securing wall(s).

8. The module according to any of the preceding claims, wherein the heat exchanger (24) is secured to the casing (40) of the module by screwing, for that purpose, the securing sites (70) of the exchanger (24) comprising securing holes (72), intended to be positioned facing the securing holes (74) of the casing.

9. The module according to any of the preceding claims, wherein the space situated between the securing walls (28; 44) is sized in such a way that the distance between the corresponding securing walls of the casing and of the exchanger is lower than 3 mm.

10. The module according to the preceding claim, wherein the surface of the portions (70) of the securing wall(s) (28) of the exchanger in contact with the casing (40) is lower than 20%, especially 10%, of the whole surface of the securing wall(s) (28).

11. The module according to any of the preceding claims, wherein the energy storage assemblies (12) substantially extend along a so-called longitudinal direction, and are superimposed with one of the contact faces (26A, 26B) of the exchanger at one of their end faces along the longitudinal direction.

12. The module according to the preceding claim, wherein the module comprises at least one strip (14) superimposed on the end faces of two adjacent storage assemblies (12) in order to electrically connect said assemblies.

13. The module according to any of the preceding claims, wherein at least one electrical isolation member, such as a mat (20) made of elastomer, is interposed between the assemblies (12) and the exchanger (24).

14. The module according to any of the preceding claims, wherein the energy storage assemblies (12) are supercapacitors.

15. A method for assembling an energy storage module (10) comprising a plurality of storage assemblies (12) and at least one heat exchanger (24), comprising the following steps:
- forming first and second groups of energy storage assemblies arranged side by side,
- positioning at least one heat exchanger (24), comprising at least two opposite contact faces (26A, 26B), between both groups of assemblies, in such a way that each contact face is respectively in thermal contact with at least one storage assembly (12) of one of the groups,
- arranging an external casing (40) in such a way that it surrounds the groups of assemblies and the heat exchanger and securing the exchanger to at least one wall (44) of the casing at least at one of its walls (28) that is distinct from the contact faces (26A, 26B), the exchanger and the casing being configured in such a way that the module has a space between the corresponding securing walls (28; 44) of the exchanger and of the casing, at least at a location distinct from a securing site (70).
